# EUROPEAN PATENT APPLICATION

(11) **EP 0 856 712 A2**
(43) Date of publication of application: **05.08.1998**
(21) Application number: 98830035.6
(22) Date of filing: 27.01.1998
(51) Int. Cl.: F25D 25/02, A47B 96/02

(54) **Shelf in particular for a refrigerator compartment**

(30) Priority: 29.01.1997 IT MI970159
(71) Applicant: Progress S.r.l., 21010 Castelveccana Varese (IT)
(72) Inventor: Cadario, Adriano, 21032 Caravate Varese (IT)
(74) Representative: Sutto, Luca

(57) **Abstract**

The invention relates to a shelf (1), preferably for a refrigerator compartment, comprising a support panel (2) made of glass to whose perimeter is associated a frame defined by four angular bodies (6,7,10,11), positioned at the vertices of the panel, and by four section bars (5,9,12,13), engaged to the sides of the panel consecutively to the angular bodies. The invention also relates to a method for manufacturing the shelf described above.

## Description

The present invention relates to a shelf in particular for a refrigerator compartment.

It should be specified that the shelf in question may obviously be adapted for use even for non refrigerator compartments for instance for compartments in cupboards, cabinets or yet other items.

As is well known, the compartments defined within refrigerators or freezers are provided with one or more shelves so positioned as to define an adequate support for foodstuffs or other products housed in the compartment itself.

Shelves for this kind of applications were in the past constructed in the form of a metal mesh, galvanised or plastic coated.

More recently, this type of shelf has essentially been replaced by shelves comprising a glass support panel fitted at its perimeter with a lining frame made of plastic material defining both grip areas to handle the shelf and engagement areas to associate the shelf to the refrigerator compartment.

The glass shelves with plastic frame currently on the market are essentially of two different types.

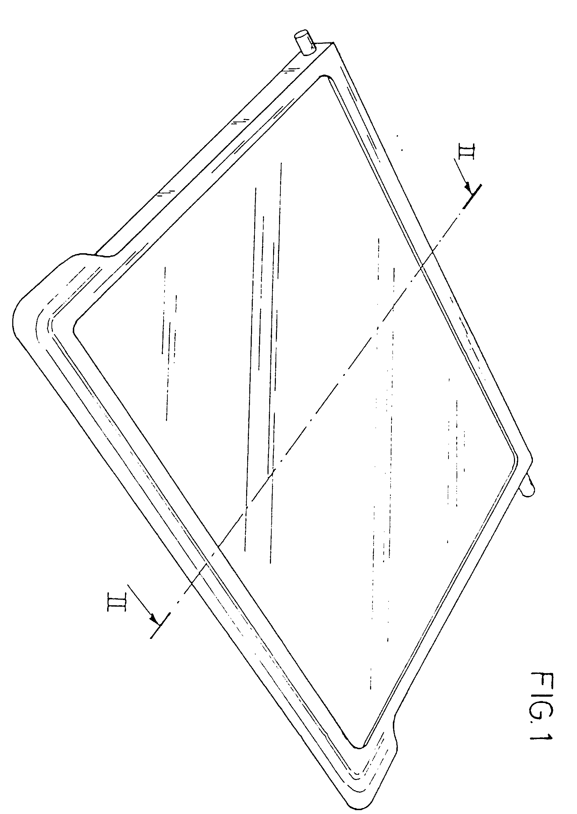

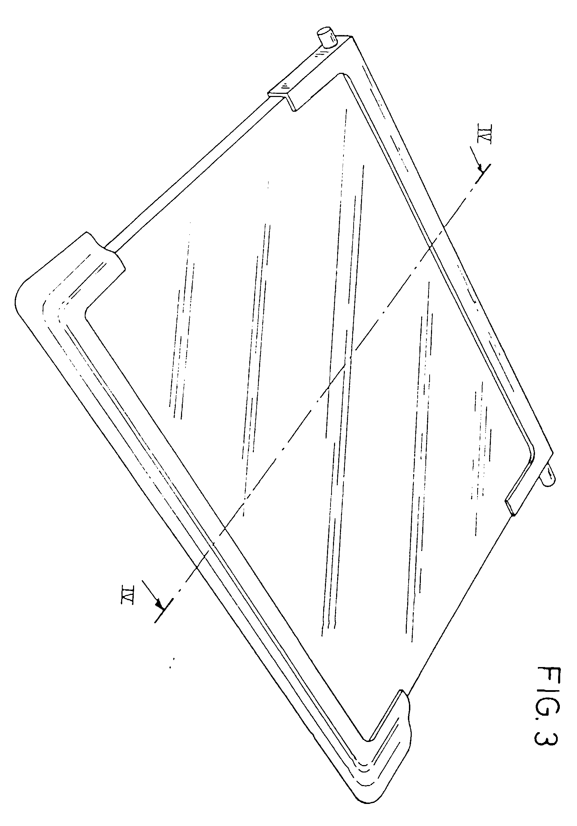

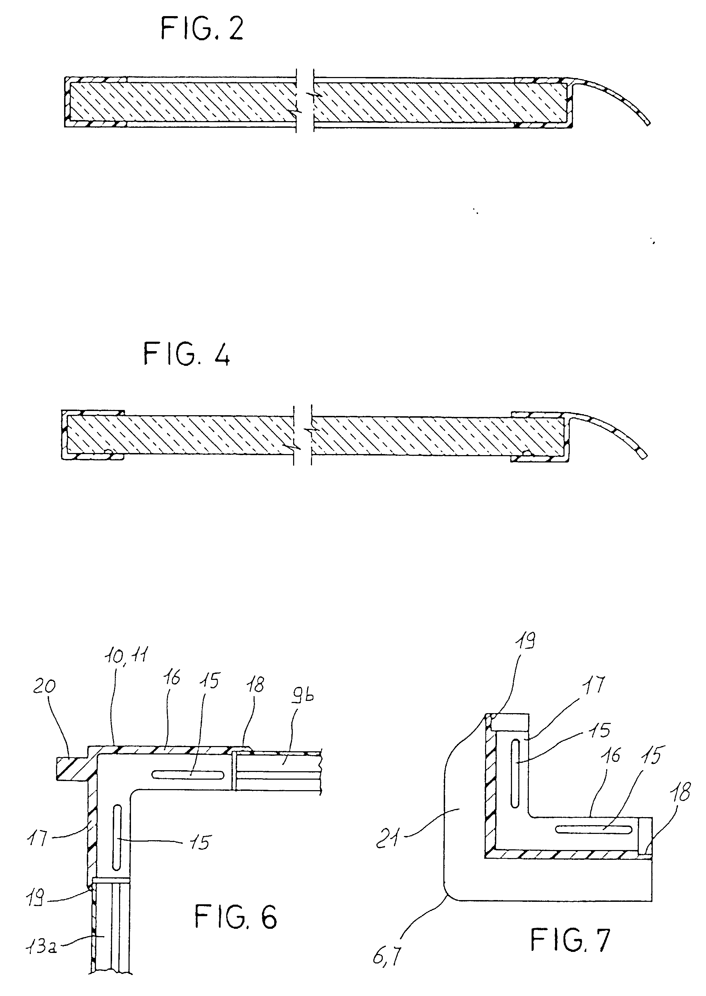

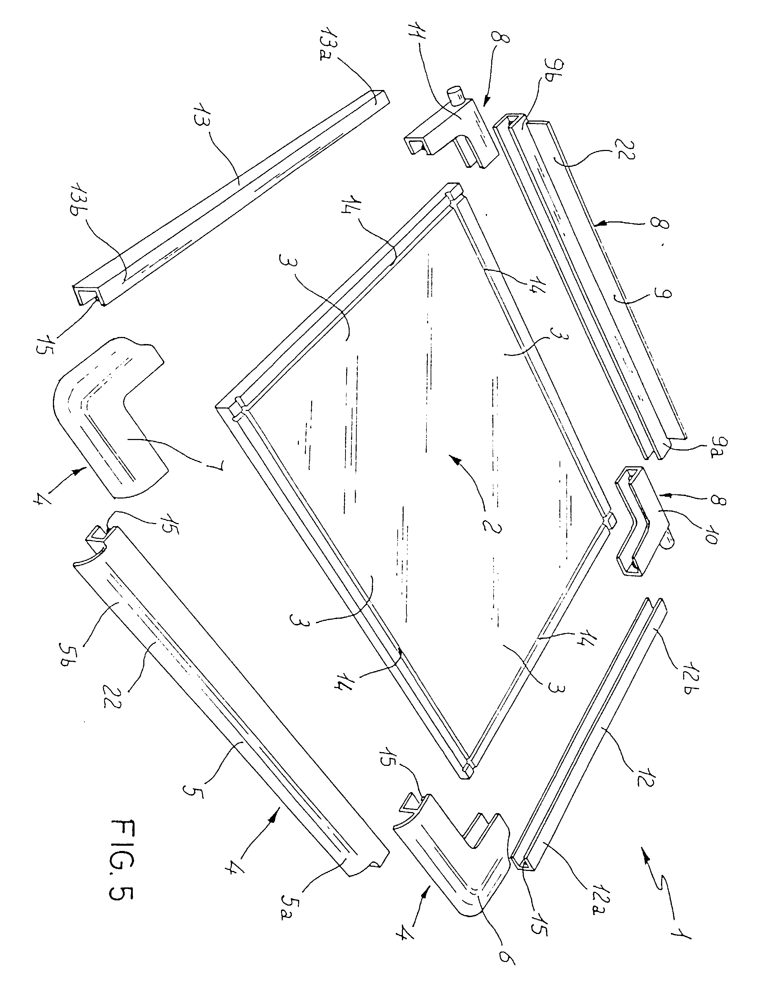

More specifically, a first type of shelf (shown in the Figures 1 and 2 enclosed herein) provides for the shelf to be defined by a central panel made of glass, normally tempered and subjected to serigraphy, to whose perimeter is associated by injection moulding a frame made of plastic material.

This type of shelf, though widely utilised in the past, has nevertheless presented several drawbacks in particular from a manufacturing point of view.

It should be noted that the need to employ injection presses to apply the plastic frame necessarily entails the use of high quality tempered glass in order to minimise the risk of ruptures therein.

In any case it should be noted that, when applying the frame, some glass panels in particular if not perfectly plane are broken all the same, thereby giving rise to scraps both of the glass material and of the plastic material as well as to additional costs due to the idle times of the press.

Moreover, the moulds currently employed for the manufacture of frames made of plastic material are of relatively large size, need to be manufactured with extreme precision and therefore entail decidedly high costs of construction.

To the above it should also be added that the shelves manufactured with the technique briefly described above necessary entail the use of as many differing moulds as are the sizes and the shapes of the shelves to be obtained, which further impacts on the overall manufacturing costs of the shelf.

Lastly it should not be forgotten that the devices such as the injection presses required for the manufacture of the shelves in question are in any case apparatuses of high intrinsic and installation costs, which frequently can be amortised only in the case of a production run with a high number of pieces.

In the attempt to solve at least in part the drawbacks mentioned above, recently a second type of shelves has become widespread, with glass panels wherein the plastic frame is defined in two separate elements essentially with C shape which are engaged by snapping respectively in correspondence with a front edge and with a rear edge of the glass panel, as shown in Figures 3 and 4 enclosed herein.

More specifically the C shaped elements present a seat that is essentially counter-shaped to the glass panel edge and provided with projections destined to be engaged by snapping into corresponding seats obtained on the glass panel itself.

The C shaped elements, as shown in the drawings, present an extension essentially equal to one of the sides of the glass panels and are manufactured by means of moulding. Obviously this type of solution allows to avoid the insertion of the glass panels into the press thereby overcoming problems due to ruptures of the panels themselves.

Moreover, it is possible to apply the C shaped elements even for panels of differing depth.

In spite of the above, it should nevertheless be noted that this second type of plastic frame panels still requires moulds of relatively large size and hence of high cost for the manufacture of the C shaped elements.

Moreover the shelves in question do not define a complete contour to the glass panel which therefore is more prone to mechanical ruptures and in any case is inferior at least from an aesthetic point of view.

It should lastly be noted, in any case, that when the length of the glass panel needs to be varied it is necessary to employ differentiated moulds for each panel, with non negligible additional costs.

In this situation, the fundamental object of the present invention is to make available a shelf that is economical to manufacture, easy to install regardless of the size of the glass panel, without thereby incurring a penalization in terms of operating safety and overall aesthetic appearance.

Within said object, an additional purpose of the invention is to offer a shelf that provides for the use of moulds of minimal dimensions, in order to reduce the manufacturing costs thereof with respect to the prior art.

This and other purposes beside which shall be made clearer in the course of the description that follows are essentially attained by a shelf, in particular for a refrigerator compartment, according to what is described in the enclosed claims.

Additional characteristics and advantages shall be made more evident by the detailed description of a preferred, but not exclusive, embodiment of a shelf according to the present invention.

The description shall be made hereafter with reference to the accompanying drawings, provided purely by way of non limiting indication, wherein:
- figures 1 and 2 show, respectively in perspective and in cross section view, a first example of prior art shelf;
- Figures 3 and 4 show, respectively in perspective and in cross section view, a second example of prior art shelf;
- Figure 5 is a perspective and exploded view of a shelf according to the invention; and
- Figures 6 and 7 are interrupted sections of details related to the shelf as per Figure 5.

With reference to the accompanying drawings and in particular to Figure 5, the number 1 indicates in its entirety a shelf, in particular for a refrigerator compartment, according to the present invention.

The shelf 1 comprises a support panel 2 preferably, but not exclusively, made of tempered or non tempered glass depending on operating requirements. Note that, depending on the conformation of the compartment whereto the shelf is destined, the panel may present triangular, rectangular, polygonal conformation, etc.

To an edge area 3 of the support panel 2 is engaged a first lining element 4 comprising originally at least a first main section bar of extended shape 5 and at least an angular body 6 positioned at an end 5a of the section bar.

Obviously, when the support panel 2 presents rectangular shape, the first lining element 4 shall also comprise a second angular body 7 positioned at the other end 5b of the first main section bar 5. Moreover, as shown in Figure 5, a second lining element 8 is to be provided, engaged to an opposite side of the support panel 2 with respect to the first lining element 4 and also fitted with a respective second main section bar 9 of extended shape and with a third and a fourth angular body 10 and 11 positioned at opposite ends 9a, 9b ofthe main section bar 9. Lastly, again with reference to a support panel 2 of rectangular conformation, an auxillary section bar 12, 13 engaged to each of the remaining sides of the panel shall be employed. More specifically a first and a second auxiliary section bar 12 and 13 are provided for, engaged to the edge area 3 and extending respectively between the first and the third angular body 6, 10 and between the second and the fourth angular body 7, 11 in such a way as to define a continuous frame positioned at the perimeter of the support panel.

In particular it should be noted that each angular element 6,7,10,11 is placed in direct continuation of the main section bar and/or of the auxiliary section bar between which it is interposed.

From the point of view of the coupling between the lining elements and the panel, it should be noted that both the first lining element 4 and the second lining element 8 are preferably engaged to the edge 3 of the support panel 2 by means of removable mechanical fastening.

Preferably, it should be noted that the panel 2 comprises seats 14 extending in correspondence with the edge area 3 parallel to the sides of the panel itself and, set to receive in snapping engagement projections 15, continuous or discrete, obtained on the main section bars 5, 9 as well as on the auxiliary section bars 12, 13, and on the angular bodies 6,7,10,11 (see also Figures 6 and 7).

With particular reference to each angular body, it should be noted that it presents portions 16 and 17 positioned transversely to one another and fitted with respective insertion seats 18, 19 to receive corresponding terminal portions 5a,5b,9a,9b,12a,12b,13a,13b of the main section bar or of the auxiliary section bar thereby ensuring the continuity of the frame even in the presence of possible dimensioning errors of the section bars during the manufacturing phase.

Also with reference to the angular elements it should be noted that the latter can be fitted with revolving coupling portions 20 to allow the rotation ofthe shelf 1 around a horizontal axis. Specifically the portions 20 are defined by cylindrical elements projecting from the angular element and destined to engage rotationally in corresponding seats defined in the refrigerator compartment. The angular elements can also be fitted with grip fins 21 or with other elements depending on the operating requirements. The main and auxiliary section bars may also be provided with projections or fins 29 destined to define grip elements, elements for containing any condensation water or elements for deviating recirculating air in a suitable manner.

From the constructive point of view the subject shelf is obtained through a method comprising originally the phases described hereafter.

First of all it is necessary to set up a support panel 2, made of glass or other similar material, possibly provided in correspondence with an edge area 3 with seats 14 extending parallel to the sides of the panel itself. Such seats are normally manufactured by means of grinding when cutting the panel and hence do not entail any additional operation.

With the phase described above it is also necessary to manufacture by means of moulding a pre-set number of angular bodies 6,7,10,11 as well as to obtain, by means of extrusion, a continuous section bar wherefrom, through transverse cutting, a pre-set number of main and possibly auxiliary section bars is obtained.

At this point it is possible to associate to the support panel at least one angular body and at least one main section bar to define a corresponding element for lining an edge area of the panel.

With reference to the embodiment shown it should be noted that it will be necessary to manufacture four angular elements and four section bars, two main and two auxiliary ones. From the manufacturing point of view the angular bodies are preferably produced in cluster moulds comprising at least four figures in order to obtain with a single moulding process all the angular bodies required for a rectangular panel. Thanks to the possibility of producing the main and auxiliary section bars by means of extrusion, simply by varying the clearance of the extrusion head it is possible to obtain any shape whatsoever and by effecting transverse cuts at differentiated distances it is possible to produce lining elements for panels of any size whatsoever.

In other words, thanks to the particular structure of the new shelf, the same can be produced with much lower manufacturing costs than traditional shelves (thanks to the reduction in the size of the moulds) and with remarkable versatility of use (thanks to the possibility of adj usting the distances between the various transverse cuts according to the different sizes of the panels).

Moreover, thanks to the modularity with which the plastic frame defined by the lining elements and by the auxiliary section bars is produced, it is possible to obtain particular aesthetic effects by differentiating the materials of the various parts or, even, the colours.

The invention is advantageous also in its more specific aspects.

In particular thanks to the presence of the insertion seats 18, 19 it is advantageously possible to compensate for possible errors in the transverse cutting tolerances of the main and auxiliary section bars thereby assuring a perfect continuity in the junction areas with the angular bodies.

Also extremely advantageous is the possibility of engaging the components defining the lining elements in a removable manner thus enabling to perform, if need be, replacement and/or cleaning operations. It should also be noted that thanks to the particular structure of the subject shelves, perimeter lining elements can be mounted directly by the manufacturer of the glass panel since the use of presses of particularly complex framing plants is not necessary. This also, clearly, results in a noticeable simplification at the manufacturing level.

Lastly it should be noted that the subject shelf allows to define a frame in correspondence with all four sides of the panel thereby assuring a structural protection and an aesthetic finish essentially equal to those of the panels with frame applied by means of injection moulding, albeit without the typical drawbacks of this technique.

## Claims

1. Shelf, in particular for a refrigerator compartment, comprising:
- a support panel (2);
- a first lining element (4) engaged to at least one edge area (3) of the panel;
characterised in that said lining element (4) comprises:
- a first main section bar (5) of extended shape;
- a first angular body (6) positioned at one end (5a) of the main section bar (5).

2. Shelf according to claim 1, characterised in that the support panel (2) is of rectangular shape.

3. Shelf according to claim 1 or 2, characterised in that said lining element (4) comprises a second angular body (7) positioned at the other end (5b) of the first main section bar (5).

4. Shelf according to claims 2 and 3, characterised in that it further comprises a second lining element (8) engaged to an opposite side of the support panel (2) with respect to the first lining element (4).

5. Shelf according to claim 4, characterised in that the second lining element (8) comprises a second main section bar (9) of extended shape and a third and a fourth angular body (10 and 11) positioned at opposite ends (9a, 9b) of the second main section bar.

6. Shelf according to claim 5, characterised in that it further comprises a first and a second auxiliary section bar (12, 13) engaged to edges of the panel respectively between the first and the third (6 and 10) and between the second and the fourth angular body (7 and 11).

7. Shelf according to claim 4, characterised in that the first and the second lining element (4 and 8) engage to the panel (2) by means of removable mechanical fastening.

8. Shelf according to one or more ofthe previous claims, characterised in that the angular body (10, 11) comprises a portion of revolving coupling (20) to allow the rotation of the shelf (1) around a horizontal axis.

9. Shelf according to claims 6 or 7 characterised in that each angular body (6,7,10,11) is placed in continuation of the main section bar (5,9) and/or of the auxiliary section bar (12,13) between which it is interposed.

10. Shelf according to claims 6 or 7 or 9 characterised in that each angular body (6,7,10,11) presents portions (16 and 17) positioned transversely to one another and fitted terminally with respective insertion seats (18, 19) to receive corresponding terminal portions (5a,5b,9a,9b,12a,12b,13a,13b) of said main section bar (5,9) and of said auxiliary section bar (12,13).

11. Shelf according to one or more of the previous claims characterised in that the support panel (2) comprises seats (14) extending in correspondence with said edge area (3), parallel to the sides of the panel itself.

12. Shelf according to claims 11 and 6 characterised in that the auxiliary section bars (12, 13) comprise continuous or discrete projections (15) for the snapping engagement within said seats (14).

13. Shelf according to claim 11, characterised in that the angular bodies (6,7,10,11) comprise projections (15) for the snapping insertion into at least one of said seats (14).

14. Method for manufacturing a shelf, in particular for a refrigerator compartment, comprising the following phases:
- setting up a support panel (2);
- moulding a pre-set number of angular bodies (6,7,10,11);
- extruding a continuous section bar;
- transversely cutting said continuous section bar to obtain a pre-set number of main section bars (5,9);
- associating at least one angular body (6,7,10,11) and at least a main section bar (5,9) to the support panel (2) to define at least a first lining element (4) of an edge area (3) of said panel.

15. Method according to claim 4, further comprising a phase wherein on the support panel (2) seats (14) are obtained which extend in correspondence with the edge area (3) parallel to the sides of the panel itself.
